# EUROPÄISCHE PATENTSCHRIFT

(11) **EP 1 421 740 B1**
(45) Veröffentlichungstag und Bekanntmachung des Hinweises auf die Patenterteilung: **12.07.2006**
(21) Anmeldenummer: 02754474.1
(22) Anmeldetag: 01.08.2002
(51) Int. Cl.: H04L 12/28

(54) **ANORDNUNG ZUR DRAHTLOSEN ANBINDUNG VON ENDEINRICHTUNGEN AN EIN KOMMUNIKATIONSSYSTEM**
ARRANGEMENT FOR THE WIRELESS CONNECTION OF TERMINALS TO A COMMUNICATION SYSTEM
AGENCEMENT POUR LE RACCORDEMENT SANS FIL DE TERMINAUX A UN SYSTEME DE COMMUNICATION

(30) Priorität: 28.08.2001 DE 10142007
(43) Veröffentlichungstag der Anmeldung: 26.05.2004
(73) Patentinhaber: SIEMENS AKTIENGESELLSCHAFT, 80333 München (DE)
(72) Erfinder: BENNING, Gerhard, 85716 Unterschleissheim (DE); KLEIN, Josef, 83623 Ascholding (DE)
(86) Internationale Anmeldenummer: PCT/DE2002/002836
(87) Internationale Veröffentlichungsnummer: WO 2003/028297

(56) Entgegenhaltungen:
- EP-A- 1 011 278
- EP-A- 1 085 774
- WO-A-01/19053
- DE-A- 10 103 743

## Beschreibung

Bei zeitgemäßen Kommunikationssystemen werden Endeinrichtungen, die unterschiedlichen Zwecken dienen können, wie z.B. einem Übertragen von Sprach-, Video-, Multimedia-, Fax-, Datei-, Programm- und/oder Messdaten, in zunehmendem Maße drahtlos angekoppelt. Mittlerweile haben sich hierfür eine Vielzahl unterschiedlicher Funknetztechnologien, wie z.B. GSM (Global System for Mobile Communication), DECT (Digital Enhanced Cordless Telephony) und insbesondere Bluetooth, für unterschiedliche Einsatzgebiete herausgebildet. Die aufgeführten Funknetztechnologien unterscheiden sich insbesondere durch die Reichweite einer jeweiligen Funkanbindung. Die Bluetooth-Technologie dient hierbei vornehmlich einer drahtlosen Kurzstreckenkommunikation zwischen verschiedenen Geräten oder Gerätekomponenten, wie z.B. zwischen einem Telefon und einer Hörsprechgarnitur. Die Reichweite einer Bluetooth-Funkanbindung ist entsprechend gering und erstreckt sich von ca. 10 cm bis zu mehreren Metern.

Beispielsweise offenbart die PCT-Publikationsschrift WO 01/19053 A1 ein Kommunikationsnetz mit mobilen, üblicherweise kabelgebundenen Endgeräten unter Einbeziehung von so genannten Name-Servern.

Moderne Kommunikationssysteme stellen häufig eine Vielzahl von Kommunikations- und Datendiensten nebst einer Fülle zugehöriger Leistungsmerkmale bereit. Eine Nutzung einer derartigen Vielzahl von Kommunikations- und Datendiensten durch entsprechend unterschiedliche, drahtlos angekoppelte Endeinrichtungen ist bisher jedoch nur eingeschränkt möglich. Im allgemeinen ist für eine spezifische Kommunikations- oder Datenanwendung eine spezifische Implementierung erforderlich.

Die deutsche Offenlegungsschrift 101 03 743 A1 offenbart beispielsweise ein Kommunikationsnetz, bei dem eine Mobilitätszentrale Endgeräte identifiziert und geeignete Kommunikationsprotokolle auswählt.

Es ist Aufgabe der vorliegenden Erfindung, eine Anordnung zur drahtlosen Anbindung von Endeinrichtungen an ein Kommunikationssystem anzugeben, durch die eine generische Plattform zur Nutzung unterschiedlicher Kommunikations- und/oder Datendienste durch drahtlos angekoppelte Endeinrichtungen realisiert wird.

Gelöst wird diese Aufgabe durch eine Anordnung mit den Merkmalen des Patentanspruchs 1.

Die erfindungsgemäße Anordnung zur drahtlosen Anbindung von Endeinrichtungen an ein Kommunikationssystem weist ein Datenpaketnetz, wie z.B. ein lokales Netz (LAN) oder ein Weitverkehrsnetz (WAN), auf, an das mindestens eine Übergangseinrichtung mit mindestens einem angekoppelten Kurzstreckenfunkmodul sowie ein Server zum Steuern von Verbindungen zu den Endeinrichtungen angekoppelt sind. Die Endeinrichtungen können hierbei z.B. Endgeräte, Personalcomputer oder darauf ablaufende Anwendungsprogramme oder Client-Anwendungen, jeweils zur Sprach-, Video-, Multimedia- und/oder Datenkommunikation sein. Der Server kann im Datenpaketnetz beispielsweise als zentrale Einheit oder als verteilte Anwendung realisiert sein und/oder in einer Übergangseinrichtung integriert sein.

Die Übergangseinrichtung weist eine Koppeltabelle mit Endeinrichtungsadressen von in Funkreichweite des mindestens einen Kurzstreckenfunkmoduls befindlichen Endeinrichtungen auf. Endeinrichtungsadressen können in diesem Zusammenhang beispielsweise Rufnummern, Internetprotokolladressen, E-Mail-Adressen oder andere sogenannte URLs (Universal Resource Locator) von Endeinrichtungen sein.

Der Server weist eine Zuordnungstabelle auf, in der einer oder mehreren Endeinrichtungsadressen jeweils eine im Datenpaketnetz gültige Netzadresse derjenigen Übergangseinrichtung zugeordnet ist, an die ein Kurzstreckenfunkmodul angekoppelt ist, in dessen Funkreichweite sich die durch diese Endeinrichtungsadresse identifizierte Endeinrichtung befindet. Um die Zuordnungstabelle mit der Koppeltabelle dynamisch abzugleichen, d.h. inhaltlich mit der Koppeltabelle konsistent zu machen, ist erfindungsgemäß ein paketbasiertes Abgleichprotokoll vorgesehen.

Weiterhin weist die Übergangseinrichtung eine Umsetzeinrichtung zum Umsetzen zwischen einem im Datenpaketnetz verwendeten Netzwerkprotokoll und einem funkmodulspezifischen Protokoll auf. Insbesondere kann die Umsetzeinrichtung zwischen einem im Datenpaketnetz verwendeten Verbindungsaufbauprotokoll und einem funkmodulspezifischen Verbindungsaufbauprotokoll umsetzen.

Die Umsetzeinrichtung verfügt weiterhin über eine Erkennungseinrichtung, um anhand des verwendeten Netzwerkprotokolls zu erkennen, welcher endeinrichtungsspezifischen Anwendung eine Verbindung zu einer Endeinrichtung zugeordnet ist, und um abhängig davon eine anwendungsspezifische Protokollumsetzung durchzuführen.

Die Ankopplung des Servers sowie der mindestens einen Übergangseinrichtung an das Datenpaketnetz erlaubt es, die Flexibilität und das große Anwendungsspektrum paketorientierter Kommunikationsnetze auf direkte und generische Weise für drahtlose Anwendungen vorteilhaft zu nutzen. Da eine entsprechende paketorientierte Kommunikationsinfrastruktur, z.B. in Form von lokalen Netzen (LAN) oder Weitverkehrsnetzen (WAN), vielerorts bereits vorhanden ist oder bereitgestellt wird, kann die Erfindung im Allgemeinen mit geringem Aufwand implementiert werden. Insbesondere kann eine Vielzahl von in derartigen Datenpaketnetzen verfügbaren Leistungsmerkmalen, Diensten und/oder Anwendungen auf verhältnismäßig einfache Weise genutzt werden. Die erfindungsgemäße Anordnung stellt somit eine flexibel erweiterbare und sehr gut skalierbare, generische Plattform zur Nutzung unterschiedlicher Kommunikations- und/oder Datendienste durch drahtlos angekoppelte Endeinrichtungen dar.

Anhand der Zuordnungstabelle kann der Server für mobile Endeinrichtungen eintreffende Verbindungsanforderungen über das Datenpaketnetz gezielt zu derjenigen Übergangseinrichtung weitervermitteln, über dessen Kurzstreckenfunkmodul eine betreffende Endeinrichtung momentan drahtlos erreichbar ist. Das paketbasierte Abgleichprotokoll erlaubt es, ein sogenanntes Roaming und/oder Handover von Endeinrichtungen über das Datenpaketnetz in generischer Weise zu steuern.

Vorteilhafte Ausführungsformen und Weiterbildungen der Erfindung sind in den abhängigen Ansprüchen angegeben.

Nach einer vorteilhaften Ausführungsform der Erfindung kann das Datenpaketnetz durch ein internetprotokollbasiertes Netzwerk realisiert werden. Dies hat den Vorteil, dass aufgrund der weltweiten Verbreitung des Internetprotokolls eine enorme Vielfalt von auf diesem Protokoll basierenden Leistungsmerkmalen, Diensten und/oder Anwendungen direkt genutzt werden können.

Vorteilhafterweise kann das funkmodulspezifische Protokoll eine spezifische Sprachschnittstelle sowie eine spezifische Datenschnittstelle aufweisen. So kann die Umsetzeinrichtung beispielsweise ein im Datenpaketnetz verwendetes, sogenanntes Voice-over-Internet-Protokoll (VoIP) auf die spezifische Sprachschnittstelle und ein Datenprotokoll, wie beispielsweise WAP (Wireless Access Protocol), HTTP (Hyper Text Transfer Protocol) oder SMTP (Simple Mail Transfer Protocol), auf die spezifische Datenschnittstelle umsetzen.

Vorzugsweise kann als Kurzstreckenfunkmodul ein sogenanntes Bluetooth-Modul eingesetzt werden. Derartige Bluetooth-Module zeichnen sich durch eine geringe Einbaugröße, hohe Datenübertragungsraten, gute Verschlüsselungseigenschaften und eine hohe Flexibilität aus.

Nach einer vorteilhaften Weiterbildung der Erfindung kann eine Ortsbestimmungseinrichtung zum Bestimmen eines momentanen Aufenthaltsortes einer jeweiligen Endeinrichtung vorgesehen sein. Eine Bestimmung des Aufenthaltsortes kann dabei anhand der Zuordnungstabelle erfolgen, indem mit Hilfe der darin gespeicherten, der Endeinrichtungsadresse der betreffenden Endeinrichtung zugeordneten Netzadresse die Übergangseinrichtung ermittelt wird, deren Kurzstreckenfunkmodul sich in der Nähe der betreffenden Endeinrichtung befindet. Die Ortsbestimmung kann umso genauer durchgeführt werden, je geringer die Funkreichweite des betreffenden Kurzstreckenfunkmoduls ist. Im Falle eines Bluetooth-Funkmoduls liegt die Genauigkeit der Ortsbestimmung im Bereich von 10 cm bis 10 Metern.

Gemäß einer weiteren vorteilhaften Weiterbildung der Erfindung kann eine an das Datenpaketnetz gekoppelte Gatewayeinrichtung zum Ankoppeln des Datenpaketnetzes an ein weiterführendes Kommunikationsnetz vorgesehen sein. Das weiterführende Kommunikationsnetz kann beispielsweise ein lokales Netz (LAN), ein Weitverkehrsnetz (WAN), ein ISDN-Netz (Integrated Services Digital Network) oder ein GSM-Netz (Global System for Mobile Communication) sein.

Gemäß weiterer vorteilhafter Ausgestaltungen der Erfindung können als Endeinrichtungen eine drahtlos anzukoppelnde Hörsprechgarnitur für Sprachverbindungen und/oder ein drahtlos anzukoppelnder, sogenannter PDA (Personal Digital Assistant) für Datenverbindungen vorgesehen sein. Ein derartiger PDA kann auch für Sprachverbindungen eingesetzt werden, indem an diesen eine Hörsprechgarnitur angeschlossen wird. Insbesondere kann ein PDA als Endeinrichtung zur Eingabe von Zieladressen, wie z.B. Rufnummern, Internetprotokolladressen, Mail-Adressen oder anderen URIs, für abgehende Verbindungen und zur Initiierung dieser Verbindungen vorgesehen sein. So kann z.B. von einem Teilnehmer eine Sprachverbindung durch Eingabe einer Rufnummer an einem drahtlos angekoppelten PDA initiiert werden, wobei die aufgebaute Sprachverbindung zwischen einer durch die eingegebene Rufnummer identifizierten, externen Endeinrichtung und einer ebenfalls drahtlos angekoppelten Hörsprechgarnitur des Teilnehmers aufgebaut wird.

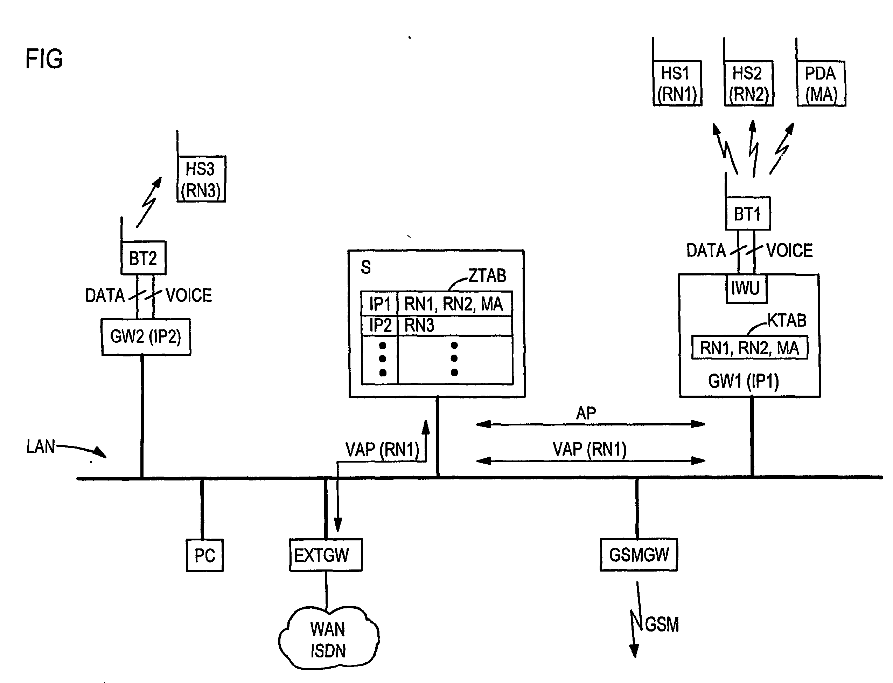

Ein Ausführungsbeispiel der Erfindung wird nachfolgend anhand der Zeichnung näher erläutert.
Die Figur zeigt ein Kommunikationssystem mit drahtlos angebundenen Endeinrichtungen in schematischer Darstellung.

In der Figur ist ein Kommunikationssystem mit drahtlos angekoppelten Endeinrichtungen, die im vorliegenden Ausführungsbeispiel als Hörsprechgarnituren HS1, HS2, HS3 und als PDA ausgestaltet sind, schematisch dargestellt. Der PDA ist in der Figur durch ein gleichlautendes Bezugszeichen bezeichnet. Das Kommunikationssystem umfasst ein als lokales Netz ausgebildetes Datenpaketnetz LAN, z.B. ein sogenanntes Ethernet, dessen Datenübertragung vorzugsweise auf Protokollen der sogenannten TCP/IP-Protokollfamilie basiert. An das Datenpaketnetz LAN ist ein Server S angeschlossen, z.B. ein sogenannter Gatekeeper gemäß der ITU-T-Empfehlung H.323, der über das Datenpaketnetz LAN führende Verbindungen, z.B. zur Sprach-, Video-, Multimedia- und/oder Datenkommunikation, und insbesondere einen Aufbau derartiger Verbindungen steuert. Diese Steuerung erfolgt vorzugsweise mittels internetprotokollbasierter Client-Server-Strukturen. Verbindungen zur Sprach-, Video- und/oder Multimediakommunikation über internetprotokollbasierte lokale Netze werden häufig auch als VoIP-Verbindungen (VoIP: Voice/Video over Internetprotocol) bezeichnet.

An das Datenpaketnetz LAN sind weiterhin Gateways GW1 und GW2 als Übergangseinrichtungen angekoppelt. Dabei ist dem Gateway GW1 eine Internetprotokolladresse IP1 und dem Gateway GW2 eine Internetprotokolladresse IP2 als jeweilige Netzadresse zugeordnet. Die Internetprotokolladressen IP1 und IP2, im Folgenden kurz als IP-Adressen bezeichnet, sind zumindest netzintern, d.h. innerhalb des Datenpaketnetzes LAN gültig und identifizieren den jeweils zugeordneten Gateway GW1 bzw. GW2 innerhalb des Datenpaketnetzes LAN eindeutig.

An die Gateways GW1 und GW2 sind Bluetooth-Sende/Empfangsmodule BT1 und BT2, im folgenden kurz Bluetooth-Module genannt, als Kurzstreckenfunkmodule angekoppelt. Das Bluetooth-Modul BT1 ist dabei an den Gateway GW1 und das Bluetooth-Modul BT2 an den Gateway GW2 angekoppelt. Vorzugsweise sind die Bluetooth-Module BT1, BT2 jeweils in den betreffenden Gateway GW1 bzw. GW2 integriert. Ein Austausch von Steuer- und Nutzdaten zwischen einem jeweiligen Gateway GW1 bzw. GW2 und einem jeweils daran angekoppelten Bluetooth-Modul BT1 bzw. BT2 erfolgt mittels eines funkmodulspezifischen Bluetooth-Protokolls mit einer spezifischen Sprachschnittstelle VOICE und einer spezifischen Datenschnittstelle DATA.

Gemäß einer alternativen Ausführungsform können anstelle eines oder mehrerer Bluetooth-Module auch andere Funkmodule, z.B. gemäß DECT- oder GSM-Standard (DECT: Digital Enhanced Cordless Telephony; GSM: Global System for Mobile Communications), gegebenenfalls mit spezifischen Sprach-, Daten, Video- und/oder Multimediaschnittstellen eingesetzt werden.

Für das vorliegende Ausführungsbeispiel sei angenommen, dass sich die Hörsprechgarnituren HS1 und HS2 sowie der PDA momentan in Funkreichweite des Bluetooth-Moduls BT1 und die Hörsprechgarnitur HS3 momentan in Funkreichweite des Bluetooth-Moduls BT2 befinden. Die Hörsprechgarnituren HS1, HS2 und HS3 sowie der PDA verfügen jeweils über ein eigenes Bluetooth-Modul (nicht dargestellt) zur drahtlosen Ankopplung an ihr jeweiliges Gegenstück BT1 bzw. BT2. Außer den Hörsprechgarnituren HS1, HS2 und HS3 und den PDA können auch beliebige weitere Endeinrichtungen, wie z.B. Personalcomputer oder darauf oder auf einem PDA ablaufende Anwendungsprogramme oder Client-Anwendungen, drahtlos angekoppelt werden.

Der Hörsprechgarnitur HS1 ist eine Rufnummer RN1, der Hörsprechgarnitur HS2 eine Rufnummer RN2, der Hörsprechgarnitur HS3 eine Rufnummer RN3 und dem PDA eine E-Mail-Adresse MA zugeordnet. Die Rufnummern RN1, RN2 und RN3 sowie die E-Mail-Adresse MA sind jeweils netzübergreifend gültige Endeinrichtungsadressen, die eine jeweils zugeordnete Endeinrichtung netzübergreifend eindeutig identifizieren.

Weiterhin sind an das Datenpaketnetz LAN ein Personalcomputer PC, ein an ein weiterführendes Kommunikationsnetz WAN bzw. ISDN angekoppelter Gateway EXTGW sowie ein zu einem GSM-Funknetz führender Gateway GSMGW angeschlossen. Über die Gateways EXTGW und GSMGW können die Endeinrichtungen HS1, HS2, HS3 und PDA an öffentliche Netze angebunden werden. Die Gateways EXGTW und GSMGW sind vorzugsweise als sogenannte VoIP-Gateways gemäß der ITU-T-Empfehlung H.323 ausgebildet und führen die entsprechenden Protokollumsetzungen durch. Das weiterführende Kommunikationsnetz kann beispielsweise ein Weitverkehrsnetz WAN, z.B. das Internet, ein ISDN-Netz ISDN oder ein weiteres lokales Netz sein.

Dem Personalcomputer PC und den Gateways EXTGW und GSMGW ist jeweils eine zumindest netzinterngültige IP-Adresse (nicht dargestellt) zugeordnet, über die diese Einrichtungen innerhalb des Datenpaketnetzes LAN identifiziert werden können. Insbesondere ist der Server S mit den Gateways GW1, GW2, EXTGW und GSMGW sowie mit dem Personalcomputer PC über das Internetprotokoll koppelbar. Der Server S kann dabei wie im vorliegenden Ausführungsbeispiel als zentrale Netzwerkeinrichtung oder alternativ dazu auch in einem Gateway oder als im Datenpaketnetz LAN verteilte Serveranwendung realisiert sein.

Der Gateway GW1 weist eine Umsetzeinrichtung IWU auf, an die das Bluetooth-Modul BT1 über die spezifische Datenschnittstelle DATA und die spezifische Sprachschnittstelle VOICE angekoppelt ist. Die Umsetzeinrichtung IWU führt eine Protokollumsetzung zwischen dem im Datenpaketnetz LAN verwendeten Internetprotokoll und dem funknetzspezifischen Bluetooth-Protokoll durch. Insbesondere wird hierbei zwischen einem im Datenpaketnetz LAN genutzten Verbindungsaufbauprotokoll VAP, z.B. gemäß der ITU-T-Empfehlung H.323, und einem Bluetooth-Verbindungsaufbauprotokoll umgesetzt. Die Umsetzeinrichtung IWU erkennt dabei anhand des im Datenpaketnetz LAN verwendeten Netzwerkprotokolls oder Verbindungsaufbauprotokolls VAP, welcher Anwendung, z.B. Sprach- oder Datenanwendung, eine jeweilige Verbindung zugeordnet ist und führt abhängig davon eine anwendungsspezifische Protokollumsetzung durch. Im vorliegenden Ausführungsbeispiel wird abhängig davon, ob eine Sprach- oder eine Datenanwendung vorliegt, auf die Sprachschnittstelle VOICE oder auf die Datenschnittstelle DATA umgesetzt.

Der Gateway GW1 weist ferner eine Koppeltabelle KTAB auf, in der die Rufnummern RN1, RN2 sowie die E-Mail-Adresse MA der sich momentan in Funkreichweite des Bluetooth-Moduls BT1 befindlichen Endeinrichtungen, hier HS1, HS2 und PDA, gespeichert sind. Die Koppeltabelle KTAB wird durch den Gateway GW1 dynamisch verwaltet. Hierbei werden jeweils die Endeinrichtungsadressen derjenigen Endeinrichtungen in die Koppeltabelle KTAB aufgenommen, die neu in Funkreichweite des Bluetooth-Moduls BT1 gelangen bzw. sich bei diesem einbuchen. Entsprechend werden Endeinrichtungsadressen aus der Koppeltabelle KTAB entfernt, wenn die betreffenden Endeinrichtungen die Funkzelle des Bluetooth-Moduls BT1 verlassen bzw. sich bei diesem abmelden.

Wie der Gateway GW1 weist auch der Gateway GW2 eine entsprechende Umsetzeinrichtung und eine entsprechende Koppeltabelle auf. Aus Übersichtlichkeitsgründen sind diese Funktionskomponenten beim Gateway GW2 jedoch nicht in der Figur dargestellt.

Weiterhin enthält der Server S eine Zuordnungstabelle ZTAB, in der den Endeinrichtungsadressen RN1, RN2, RN3 und MA jeweils die IP-Adresse IP1 bzw. IP2 desjenigen Gateways GW1 bzw. GW2 zugeordnet ist, über den eine durch eine jeweilige Endeinrichtungsadresse identifizierte Endeinrichtung momentan erreichbar ist. Im vorliegenden Ausführungsbeispiel ist den Endeinrichtungsadressen RN1, RN2 und MA die IP-Adresse IP1 des Gateways GW1 und der Rufnummer RN3 die IP-Adresse IP2 des Gateways GW2 in der Zuordnungstabelle ZTAB zugeordnet.

Die Zuordnungstabelle ZTAB wird vom Server S dynamisch verwaltet, wobei sie laufend mit der Koppeltabelle KTAB abgeglichen wird, so dass die Dateninhalte beider Tabellen miteinander konsistent sind.

Der Abgleich der Zuordnungstabelle ZTAB mit der Koppeltabelle KTAB erfolgt mittels eines internetprotokollbasierten Abgleichprotokolls AP, das über das Datenpaketnetz LAN zwischen dem Server S und dem Gateway GW1 ausgeführt wird. Mittels des Abgleichprotokolls AP wird ein jeweils aktueller Dateninhalt der Koppeltabelle KTAB über das Datenpaketnetz LAN zum Server S übertragen, um dort dynamisch die Zuordnungstabelle ZTAB zu aktualisieren. Das Abgleichprotokoll AP basiert hierbei vorzugsweise auf einem Client-Server-Prinzip. Im vorliegenden Ausführungsbeispiel werden im Rahmen des Abgleichprotokolls AP die in der Koppeltabelle KTAB gespeicherten Endeinrichtungsadressen RN1, RN2 und MA zusammen mit der IP-Adresse IP1 der Gatewayeinrichtung GW1 zum Server S übertragen und dort einander zugeordnet und in der Zuordnungstabelle ZTAB abgespeichert. Sobald sich eine weitere Endeinrichtung (nicht dargestellt) beim Bluetooth-Modul BT1 einbucht, wird deren Endeinrichtungsadresse in der Koppeltabelle KTAB gespeichert und mittels des Abgleichprotokolls AP zum Server S übertragen, wo diese Endeinrichtungsadresse der IP-Adresse IP1 des Gateways GW1 zugeordnet in der Zuordnungstabelle ZTAB abgespeichert wird. Der Server S kann anhand der Zuordnungstabelle ZTAB ein Roaming und/oder Handover von mobilen Endeinrichtungen steuern. Die Zuordnungstabelle ZTAB wirkt somit als Roaming- bzw. Handover-Tabelle und wird durch das paketbasierte Abgleichprotokoll AP in generischer Weise und nicht - wie beim Stand der Technik - in funknetzspezifischer Weise verwaltet.

Ein entsprechendes Abgleichprotokoll (aus Übersichtlichkeitsgründen nicht dargestellt) läuft auch zwischen dem Server S und allen weiteren an das Datenpaketnetz LAN Einrichtungen, hier GW2, PC, EXTGW und GSMGW, ab.

Für das vorliegende Ausführungsbeispiel sei als betriebstypische Situation angenommen, dass ein Benutzer die Hörsprechgarnitur HS1 sowie den PDA bei sich trägt. Mittels der Hörsprechgarnitur HS1 können ankommende Anrufe vom Benutzer ohne weitere Hilfsmittel entgegengenommen werden. Für abgehende Anrufe kann der Benutzer den PDA verwenden, indem er dort eine Zielrufnummer eingibt und den Anruf initiiert. Im Rahmen des Anrufs wird dann eine Verbindung zwischen dem gerufenen Endgerät und der Hörsprechgarnitur HS1 aufgebaut. Im Allgemeinen können mittels der Hörsprechgarnitur HS1 drahtlose Sprachverbindungen über die spezifische Sprachschnittstelle VOICE und mittels des PDA drahtlose Datenverbindungen, z.B. zur Übermittlung von E-Mails, über die spezifische Datenschnittstelle DATA realisiert werden. Falls der PDA über einen eigenen Anschluß für Hörsprechgarnituren verfügt, können über den PDA auch Sprachverbindungen realisiert werden.

Im vorliegenden Ausführungsbeispiel befinden sich die Hörsprechgarnitur HS1 und der PDA momentan in Funkreichweite des Bluetooth-Moduls BT1 und sind bei diesem eingebucht. Infolgedessen werden die Rufnummer RN1 der Hörsprechgarnitur HS1 und die E-Mail-Adresse MA des PDA in der Koppeltabelle KTAB des Gateways GW1 gespeichert.

Im Folgenden sei angenommen, das aus dem weiterführenden Kommunikationsnetz WAN bzw. ISDN ein Anruf für die Rufnummer RN1 eintrifft. Das Eintreffen des Anrufs wird vom Gateway EXTGW mittels eines im Datenpaketnetz LAN verwendeten, internetprotokollbasierten Verbindungsaufbauprotokolls VAP, z.B. gemäß der ITU-T-Empfehlung H.323, zum Server S übermittelt. Das Verbindungsaufbauprotokoll VAP basiert vorzugsweise auf einem Client-Server-Modell. Im Rahmen des Verbindungsaufbauprotokolls VAP wird die Rufnummer RN1 der gerufenen Endeinrichtung HS1 zum Server S übermittelt.

Der Server S stellt zunächst anhand des Verbindungsaufbauprotokolls VAP fest, welcher Anwendung die aufzubauende Verbindung zugeordnet ist. Im vorliegenden Ausführungsbeispiel sei dies eine Telefonieanwendung. Weiterhin durchsucht der Server S die Zuordnungstabelle ZTAB nach der empfangenen Rufnummer RN1, um festzustellen, ob die dadurch identifizierte Endeinrichtung über das vom Server S kontrollierte Datenpaketnetz LAN erreichbar ist, und um den zuständigen Gateway zu ermitteln. Im vorliegenden Ausführungsbeispiel stellt der Server S fest, dass die Rufnummer RN1 der IP-Adresse IP1 des Gateways GW1 zugeordnet ist und vermittelt daraufhin den eintreffenden Anruf sowie die Rufnummer RN1 mit Hilfe des Verbindungsaufbauprotokolls VAP zum durch die IP-Adresse IP1 identifizierten Gateway GW1. Somit wird der Verbindungsaufbau und die erforderliche Adressauflösung durch den Server S anhand der Zuordnungstabelle ZTAB durchgeführt. Falls die Endeinrichtung HS1 in die Funkzelle eines anderen Bluetooth-Moduls, z.B. BT2, gelangt, wird die Zuordnungstabelle ZTAB mit Hilfe des Abgleichprotokolls AP automatisch aktualisiert, so dass nachfolgend eintreffende Verbindungsanforderungen oder auch bereits bestehende Verbindungen zum betreffenden Gateway, hier GW2, umgeleitet werden (Roaming bzw. Handover).

Der zum Gateway GW1 vermittelte Anruf wird durch den Gateway GW1 anhand der empfangenen Rufnummer RN1 der Hörsprechgarnitur HS1 zugeordnet und über das Bluetooth-Modul BT1 zur Hörsprechgarnitur HS1 durchgestellt.

Durch die erfindungsgemäße Kopplung von Bluetooth- und Voice-over-IP-Technologien können die vielfältigen Leistungsmerkmale und die vielerorts bereits vorhandene leistungsfähige Infrastruktur von Voice-over-Internetprotokoll-Netzen zur drahtlosen Anbindung von Endeinrichtungen verschiedenster Art mittels Bluetooth-Modulen genutzt werden.

## Patentansprüche

1. Anordnung zur drahtlosen Anbindung von Endeinrichtungen (HS1, HS2, HS3, PDA) an ein Kommunikationssystem, mit
a) einem Datenpaketnetz (LAN) zum Übertragen von Datenpaketen anhand von netzintern gültigen Netzadressen (IP1, IP2),
b) mindestens einer an das Datenpaketnetz (LAN) gekoppelten Übergangseinrichtung (GW1, GW2), an die mindestens ein Kurzstreckenfunkmodul (BT1, BT2) angekoppelt ist, wobei die Übergangseinrichtung (GW1, GW2) eine Koppeltabelle (KTAB) mit Endeinrichtungsadressen (RN1, RN2, RN3, MA) von in Funkreichweite des mindestens einen Kurzstreckenfunkmoduls (BT1, BT2) befindlichen Endeinrichtungen (HS1, HS2, HS3, PDA) aufweist,
c) einem an das Datenpaketnetz (LAN) gekoppelten Server (S) zum Steuern von Verbindungen zu den Endeinrichtungen (HS1, HS2, HS3, PDA), **dadurch gekennzeichnet, daß** der Server (S) eine Zuordnungstabelle (ZTAB) aufweist, in der einer Endeinrichtungsadresse (RN1, RN2, RN3, MA) einer Endeinrichtung (HS1, HS2, HS3, PDA) jeweils eine Netzadresse (IP1, IP2) derjenigen Übergangseinrichtung (GW1, GW2) zugeordnet ist, an die ein Kurzstreckenfunkmodul (BT1, BT2) angekoppelt ist, in dessen Funkreichweite sich diese Endeinrichtung (HS1, HS2, HS3, PDA) befindet, und
d) die Anordnung ferner ein paketbasiertes Abgleichprotokoll enthält (AP) zum dynamischen Abgleich der Zuordnungstabelle (ZTAB) mit der Koppeltabelle (KTAB),
wobei
die Übergangseinrichtung (GW1, GW2) eine Umsetzeinrichtung (IWU) zum Umsetzen zwischen einem im Datenpaketnetz verwendeten Netzwerkprotokoll und einem funkmodulspezifischen Protokoll aufweist und
die Umsetzeinrichtung (IWU) eine Erkennungseinrichtung aufweist, um anhand des verwendeten Netzwerkprotokolls zu erkennen, welcher endeinrichtungsspezifischer Anwendung eine Verbindung zu einer Endeinrichtung (HS1, HS2, HS3, PDA) zugeordnet ist, und um abhängig davon eine anwendungsspezifische Protokollumsetzung durchzuführen.

2. Anordnung nach Anspruch 1,
**dadurch gekennzeichnet,**
**dass** das Datenpaketnetz (LAN) durch ein internetprotokollbasiertes Netzwerk realisiert ist.

3. Anordnung nach einem der vorhergehenden Ansprüche,
**dadurch gekennzeichnet,**
**dass** das funkmodulspezifische Protokoll eine spezifische Sprachschnittstelle (VOICE) sowie eine spezifische Datenschnittstelle (DATA) aufweist.

4. Anordnung nach einem der vorhergehenden Ansprüche,
**dadurch gekennzeichnet,**
**dass** als Kurzstreckenfunkmodul (BT1, BT2) ein sog. Bluetooth-Modul eingesetzt ist.

5. Anordnung nach einem der vorhergehenden Ansprüche,
**gekennzeichnet durch**
eine Ortsbestimmungseinrichtung zum Bestimmen eines momentanen Aufenthaltsorts einer jeweiligen Endeinrichtung (HS1, HS2, HS3, PDA) anhand der Zuordnungstabelle (ZTAB).

6. Anordnung nach einem der vorhergehenden Ansprüche,
**gekennzeichnet durch**
eine an das Datenpaketnetz gekoppelte Gatewayeinrichtung (EXTGW, GSMGW) zum Ankoppeln des Datenpaketnetzes (LAN) an ein weiterführendes Kommunikationsnetz (WAN, ISDN).

7. Anordnung nach einem der vorhergehenden Ansprüche,
**gekennzeichnet durch**
eine Hörsprechgarnitur (HS1, HS2, HS3) als Endeinrichtung für Sprachverbindungen.

8. Anordnung nach einem der vorhergehenden Ansprüche,
**gekennzeichnet durch**
einen sog. PDA (Personal Digital Assistant) (PDA) als Endeinrichtung für Datenverbindungen.

9. Anordnung nach einem der vorhergehenden Ansprüche,
**gekennzeichnet durch**
einen sog. PDA (Personal Digital Assistant) (PDA) als Endeinrichtung zur Eingabe von Zieladressen für abgehende Verbindungen und zur Initiierung dieser Verbindungen.

## Claims

1. Arrangement for the wireless connection of terminal devices (HS1, HS2, HS3, PDA) to a communication system, with
a) a data packet network (LAN) for the transmission of data packets using network addresses (IP1, IP2) valid within the network,
b) at least one transition device (GW1, GW2) coupled to the data packet network (LAN), to which at least one short-range radio module (BT1, BT2) is coupled, with the transition device (GW1, GW2) having a coupling table (KTAB) with terminal device addresses (RN1, RN2, RN3, MA) of terminal devices (HS1, HS2, HS3, PDA) located within the radio range of at least one short-range radio module (BT1, BT2),
c) a server (S) coupled to the data packet network (LAN) for controlling connections to the terminal devices (HS1, HS2, HS3, PDA), **characterised in that** the server (S) has an allocation table (ZTAB) in which a network address (IP1, IP2) of the particular transition device (GW1, GW2) is allocated in each case to a terminal device address (RN1, RN2, RN3, MA) of a terminal device (HS1, HS2, HS3, PDA), to which transition device (GW1, GW2) a short-range radio module (BT1, BT2) in whose radio range this terminal device (HS1, HS2, HS3, PDA) is located, is coupled, and
d) the arrangement further contains a packet-based alignment protocol (AP) for the dynamic alignment of the allocation table (ZTAB) with the coupling table (KTAB)
with
the transition device (GW1, GW2) having a translator (IWU) for translating between a network protocol used in the data packet network and the protocol specific to the radio module,
the translator (IWU) having a detection device in order to detect, by means of the network protocol used, which application specific to the terminal device a connection to a terminal device (HS1, HS2, HS3, PDA) is allocated to, so as to enable an application-specific translation to be accordingly performed

2. Arrangement in accordance with claim 1,
**characterised in that**,
the data packet network (LAN) is realised by a network based on an Internet protocol.

3. Arrangement in accordance with one of the preceding claims,
**characterised in that**
the protocol specific to the radio module comprises a specific voice interface (VOICE) as well as a specific data interface (DATA).

4. Arrangement in accordance with one of the preceding claims,
**characterised in that**
a Bluetooth module is used as a short-range radio module (BT1, BT2).

5. Arrangement in accordance with one of the preceding claims,
**characterised by**,
a locating device for determining a momentary location of a particular terminal device (HS1, HS2, HS3, PDA) by means of the allocation table (ZTAB).

6. Arrangement in accordance with one of the preceding claims,
**characterised by**
a gateway device (EXTGW, GSMGW) coupled to the data packet network for coupling the data packet network (LAN) to a forwarding communication network (WAN, ISDN).

7. Arrangement in accordance with one of the preceding claims,
**characterised by**
a headset (HS1, HS2, HS3) as a terminal device for voice connections.

8. Arrangement in accordance with one of the preceding claims,
**characterised by**
a PDA (Personal Digital Assistant) (PDA) as a terminal device for data connections.

9. Arrangement in accordance with one of the preceding claims,
**characterised by**
a PDA (Personal Digital Assistant) (PDA) as a terminal device for entering destination addresses for outgoing connections and for initiating those connections.

## Revendications

1. Agencement pour le raccordement sans fil de terminaux (HS1, HS2, HS3, PDA) à un système de communication, comprenant
a) un réseau de paquets de données (LAN) pour la transmission de paquets de données à l'aide d'adresses de réseau (IP1, IP2) valides de manière interne au réseau,
b) au moins un dispositif de transition (GW1, GW2) raccordé au réseau de paquets de données (LAN), auquel est raccordé au moins un module radio à courte distance (BT1, BT2), le dispositif de transition (GW1, GW2) présentant un tableau de connexions (KTAB) comprenant des adresses de terminaux (RN1, RN2, RN3, MA) d'équipements terminaux (HS1, HS2, HS3, PDA) se trouvant à portée radio de l'au moins un module radio à courte distance (BT1, BT2),
c) un serveur (S) connecté au réseau de paquets de données (LAN) pour la commande de liaisons vers les équipements terminaux (HS1, HS2, HS3, PDA), **caractérisé en ce que** le serveur (S) présente un tableau d'affectations (ZTAB) dans lequel à chaque fois une adresse de réseau (IP1, IP2) du dispositif de transition (GW1, GW2), auquel est raccordé un module radio à courte distance (BT1, BT2), dans la portée radio duquel se trouve cet équipement terminal (HS1, HS2, HS3, PDA), est affectée à une adresse de terminal (RN1, RN2, RN3, MA) d'un équipement terminal (HS1, HS2, HS3, PDA), et
d) l'agencement comprenant en outre un protocole d'adaptation (AP) pour l'adaptation dynamique du tableau d'affectations (ZTAB) au tableau de connexions (KTAB),
le dispositif de transition (GW1, GW2) présentant un dispositif de conversion (IWU) pour la conversion entre un protocole de réseau utilisé dans le réseau de paquets de données et un protocole spécifique au module radio, et le dispositif de conversion (IWU) présentant un dispositif de reconnaissance afin de reconnaître à l'aide du protocole de réseau utilisé à quelle application spécifique au terminal est affectée une liaison vers un équipement terminal (HS1, HS2, HS3, PDA) et, en fonction de cela, d'exécuter une conversion de protocole spécifique à l'application.

2. Agencement selon la revendication 1,
**caractérisé en ce**
**que** le réseau de paquets de données (LAN) est réalisé par un réseau basé sur le protocole Internet.

3. Agencement selon l'une quelconque des revendications précédentes,
**caractérisé en ce**
**que** le protocole spécifique au module radio présente une interface vocale spécifique (VOICE) ainsi qu'une interface de données spécifique (DATA).

4. Agencement selon l'une quelconque des revendications précédentes,
**caractérisé en ce**
**qu'**un dit module Bluetooth est utilisé comme module radio à courte distance (BT1, BT2).

5. Agencement selon l'une quelconque des revendications précédentes,
**caractérisé par**
un dispositif de localisation pour déterminer un lieu de séjour momentané d'un équipement terminal respectif (HS1, HS2, HS3, PDA) à l'aide du tableau d'affectations (ZTAB).

6. Agencement selon l'une quelconque des revendications précédentes,
**caractérisé par**
un dispositif de passerelles (EXTGW, GSMGW) raccordé au réseau de paquets de données, pour raccorder le réseau de paquets de données (LAN) à un réseau de communication menant plus loin (WAN, ISDN).

7. Agencement selon l'une quelconque des revendications précédentes,
**caractérisé par**
une garniture d'audition et de conversation (HS1, HS2, HS3) en tant qu'équipement terminal pour les liaisons vocales.

8. Agencement selon l'une quelconque des revendications précédentes,
**caractérisé par**
un dit PDA (Personal Digital Assistant) en tant qu'équipement terminal pour les liaisons de données.

9. Agencement selon l'une quelconque des revendications précédentes,
**caractérisé par**
un dit PDA (Personal Digital Assistant) en tant qu'équipement terminal pour l'entrée d'adresses cibles pour les liaisons sortantes et pour initier ces liaisons.
